# EUROPÄISCHE PATENTSCHRIFT

(11) **EP 2 202 075 B1**
(45) Veröffentlichungstag und Bekanntmachung des Hinweises auf die Patenterteilung: **13.02.2013**
(21) Anmeldenummer: 09015656.3
(22) Anmeldetag: 17.12.2009
(51) Int. Cl.: B41F 33/00, B65H 26/00

(54) **Verfahren und Vorrichtung zur Druckbeobachtung mittels einer Zeilenkamera**
Method and device for monitoring a printed image by means of line scan camera
Procédé et dispositif d'observation d'impression à l'aide d'une caméra à lignes

(30) Priorität: 22.12.2008 DE 102008064390
(43) Veröffentlichungstag der Anmeldung: 30.06.2010
(73) Patentinhaber: BST International GmbH, 33739 Bielefeld (DE)
(72) Erfinder: Wiebe, Michael, 33818 Leopoldshöhe (DE); Lohmeier, Christian, 33739 Bielefeld (DE)
(74) Vertreter: Klingseisen, Franz

(56) Entgegenhaltungen:
- EP-A2- 2 186 639

## Beschreibung

Bei der Druckbildüberprüfung eines von einer Druckmaschine laufend produzieren Druckbildes kommen verschiedene Systeme zum Einsatz- Bekannt sind Spiegeltrommelsysteme und CCD-Flächenkamerasysteme mit Stroboskopbeleuchtung. Für die automatische Druckbildüberprüfung werden immer häufiger auch Zeilenkamerasysteme eingesetzt, wobei die Zeilenkamera zusammen mit einer entsprechenden Beleuchtungsquelle fest an der Druckmaschine angebaut wird und einen Erfässungsbereich hat, der sich über die gesamte bedruckte Bahnbreite erstreckt. Die feste Position der Zeilenkamera ist möglich, weil die Druckbahn vor der Kamera vorbeibewegt wird, sodass aus den aufgenommenen Zeilen ein flächiges Bild zusammengesetzt werden kann.

Zeilenkameras haben in Bezug auf die Beleuchtungsmöglichkeiten erhebliche Vorteile, weil verschiedene Strahlengänge bzw.. verschiedene Winkel des einfallenden Lichts ausgenutzt werden können, ohne dass die Linienabbildung der Kamera aus den Fokussierung gerät. Dies ist bei Flächenkameras nicht möglich.. Der Nachteil der Zeilenkamera liegt aber in den Kosten für die Kamera einerseits und für die Beleuchtung andererseits sowie in der schlechten Auflösung des aufgenommenen Druckbildes.

Die unter Art. 54 (3) EPÜ fallende EP 2 186 639 A2 beschreibt ein Verfahren und eine Vorrichtung zum Überprüfen eines Druckbildes auf einer laufenden Materialbahn mittels einer Kamera, wobei das von der Kamera aufgenommene Druckbild auf einem Monitor wiedergegeben und ein zu überprüfender Teilbereich des Druckbildes mittels einer elektronische Steuereinrichtung an einem virtuellen Sollsichtbild oder dem von der Kamera aufgenommenen Druckbild ausgewählt wird. Das von der Kamera aufgenommene reale Druckbild wird in einem Speicher abgespeichert und abschnittsweise fortlaufend erneuert, während am Monitor ein ausgewählter Teilbereich des im Speichel gespeicherten Druckbildes zur Überprüfung wiedergegeben wird Hierbei werden von der Kamera fortlaufend Abschnitte oder Teilbereiche des Druckbildes aufgenommen, wobei das im Speicher gespeicherte Druckbild fortlaufend abschnittsweise durch die von der Kamera aufgenommenen Teilbereiche erneuert wird.

Der Erfindung liegt die Aufgabe zugrunde, diese Nachteile bei der Verwendung einer Zeilenkamera zur Druckbildüberprüfung zu überwinden.

Dies wird erfindungsgemäß im Wesentlichen dadurch erreicht, dass eine Zeilenkamera auf einer Traverse quer zur laufenden Druckbahn bewegt wird Hierdurch kann die Zeilenkamera für eine begrenzte Breite des Druckbildes ausgelegt werden, die schmäler ist als das gesamte Druckbild. Durch Verfahren der Zeilenkamera quer zur Druckbahn ist es möglich, jeden Teil des Druckbildes zu erreichen und mittels der Zeilenkamera abzubilden, sodass das gesamte Druckbild aus den aufgenommenen Teilbereichen zusammengesetzt werden kann.

Dadurch, dass die Betrachtungsbreite der Druckbahn durch die Zeilenkamera begrenzt wird, kann die verfügbare Auflösung der Zeilenkamera auf einen entsprechenden Bereich ausgelegt werden. Damit kann quer zur Druckbahn nahezu jede beliebige optische Auflösung erreicht werden. Darüber hinaus kann die Beleuchtungsquelle für einen entsprechend schmalen Beobachtungsbereich ausgelegt werden, wodurch Kosten eingespart werden können. Es kann auch eine Zeile mit weniger Bildpunkten gewählt werden, wodurch einerseits Kosten reduziert werden, andererseits eine höhere Zeilenfrequenz möglich ist, sodass eine höhere Auflösung in Bahnlaufrichtung erreicht werden kann. Insgesamt kann durch eine quer zur laufenden Druckbahn verfahrbare Zeilenkamera mit geringeren Kosten eine höhere Auslösung erreicht werden als mit der bekannten festen Positionierung einer Zeilenkamera über einer Druckbahn.

Die Erfindung wird beispielsweise anhand der Zeichnung näher erläutert. Es zeigen
- Fig. 1: eine schematische Ansicht einer auf einer Traverse quer zu einer Druckbahn verfahrbaren Kamera und
- Fig. 2: eine schematische Querschnittsansicht der Anordnung in Fig. 1.

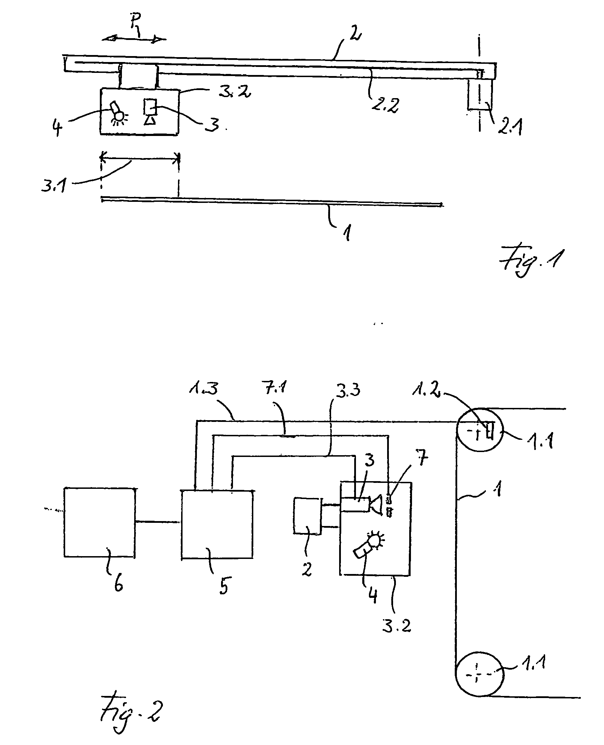

Mit 1 ist eine Druckbahn bezeichnet, die über Walzen 1.1 einer nicht dargestellten Druckmaschine läuft. Bei dem Ausführungsbeispiel nach Fig. 1 erstreckt sich die Breite des zu beobachtenden Druckmotivs über die Breite der Druckbahn 1. Über der Druckbahn 1 oder in der Anordnung nach Fig. 2 vor der Druckbahn 1 erstreckt sich eine Traverse 2 über die Breite der Druckbahn, längs der eine Zeilenkamera 3 beispielsweise mittels eines Motors 2.1 verfahrbar ist, der beispielsweise über einen Zahnriemen 2.2 die Zeilenkamera 3 längs der Traverse 2 bewegt, wie durch einen Doppelpfeil P in Fig. 1 wiedergegeben. Die auf der Traverse 2 verfahrbare Beobachtungseinheit mit der Zeilenkamera 3 kann auch eine Beleuchtungseinrichtung 4 für den Abbildungs- bzw. Sichtbereich der Zeilenkamera aufweisen, der in Fig. 1 mit 3.1 bezeichnet ist und sich nur über einen Teilbereich der Breite der Druckbahn 1 bzw. des Druckmotivs auf der Druckbahn 1 erstreckt. Zeilenkamera 3 und Beleuchtungseinrichtung 4 können in einem gemeinsamen Gehäuse 3.2 angeordnet sein.

Die Beobachtungseinheit kann auch nur die Zeilenkamera 3 aufweisen, während die Beleuchtungseinrichtung 4 außerhalb der Beobachtungseinheit beispielsweise fest positioniert sein kann, sodass sie die gesamte Breite der Druckbahn 1 ausleuchtet. Die Anordnung der Beleuchtungseinrichtung 4 in der verfahrbaren Beobachtungseinheit ermöglicht eine kostengünstige Ausgestaltung der Beleuchtungseinrichtung, die bei dieser Anordnung auf den Sichtbereich 3.1 der Zeilenkamera 3 ausgelegt werden kann.

Nach einer anderen Ausgestaltung kann, wenn das Druckbild auf einer transparenten Druckbahn beobachtet werden soll, eine Beleuchtungseinrichtung auch auf der der Zeilenkamera gegenüberliegenden Seite der Druckbahn 1 angeordnet sein, die durch die Druckbahn hindurch das Druckbild beleuchtet. Eine solche Beleuchtungseinrichtung wird vorzugsweise ebenfalls auf einer Traverse verfahrbar angeordnet, wobei die Beleuchtungseinrichtung synchron mit der Zeilenkamera 3 auf der gegenüberliegenden Seite der Druckbahn 1 quer zu dieser bewegt wird.

Eine solche Beleuchtungseinrichtung auf der der Zeilenkamera 3 gegenüberliegenden Seite der Druckbahn 1 kann auch zusätzlich zu einer Beleuchtungseinrichtung 4 vorgesehen werden, die auf der Seite der Zeilenkamera 1 angeordnet ist.

Die Aufnahme des Druckbildes durch die verfahrbare Zeilenkamera 3 kann in der Weise erfolgen, dass ein Teilbereich der Breite des Druckbildes, wie z. B. der Sichtbereich 3.1 in Fig. 1, während einer Umdrehung des Druckzylinders der Druckmaschine in aufeinander folgenden Zeilen in Laufrichtung der Druckbahn aufgenommen wird, worauf die Zeilenkamera während der nächsten Umdrehung des Druckzylinders in den nächsten Teilbereich quer zur Druckbahn verfahren wird, um wiederum in diesem Teilbereich das Druckbild während einer Umdrehung des Druckzylinders aufzunehmen. Aus den verschiedenen Teilbereichen der Breite des aufgenommenen Druckbildes kann das gesamte Druckbild zusammengesetzt werden.

Nach einer anderen Ausgestaltung kann die Zeilenkamera 3 kontinuierlich auf der Traverse 2 quer zur Druckbahn 1 verfahren werden, wobei ein schräg zur Laufrichtung der Druckbahn 1 verlaufender Teilbereich des Druckbildes aufgenommen und das gesamte Druckbild aus solchen schräg verlaufenden Teilbereichen zusammengesetzt wird.

Die von der Zeilenkamera 3 aufgenommenen, zeilenförmigen Bildpunkte werden über eine Signalleitung 3.3 in einer Steuer- und Speichereinheit 5 abgespeichert und zu einem Gesamtbild des Druckmotivs zusammengesetzt, das auf einem Monitor 6 wiedergegeben wird. Mit 1.2 ist ein Drehzahlsensor bzw. Drehimpulsgeber in Fig. 2 bezeichnet, dessen Signale über die Signalleitung 1.3 in der Steuer- und Speichereinheit 5 unter anderem für den Bildaufbau verarbeitet werden.

Durch die Beschränkung der Abbildung des Druckmotivs auf einen Teilbereich des Druckmotivs bzw. der Druckbahn 1 kann eine kostengünstige Zeilenkamera 3 mit einer vorgegebenen Anzahl von Bildpunkten eingesetzt werden, sodass man auf dem Sichtbereich 3.1 der Zeilenkamera eine hohe Auflösung erhält. Bei einer Zeilenkamera liegt die Geschwindigkeitsgrenze in der maximalen Bildpunktfrequenz, d. h. in der Zeit, in der die Bildpunkte der Zeilenkamera nacheinander vollständig ausgelesen werden können. Die Geschwindigkeitsgrenze ergibt sich somit aus der Anzahl der Bildpunkte auf der Zeile multipliziert mit der Anzahl der Zeilen, die pro Sekunde ausgelesen werden. Bei vielen Bildpunkten pro Zeile ergibt sich eine geringe Zeilenfrequenz, während weniger Bildpunkte pro Zeile eine höhere Zeilenfrequenz zulassen, weil weniger Bildpunkte ausgelesen werden müssen.

Zur Beleuchtung des Sichtbereichs der Zeilenkamera 3 können verschiedene Beleuchtungsarten vorgesehen werden. Beispielsweise kann eine konstant leuchtende Beleuchtungseinrichtung 4 vorgesehen werden. Es ist auch möglich, eine durch einen Shutter gesteuerte Belichtung vorzusehen, der mit einer festen Belichtungszeit arbeitet. Wenn beispielsweise nach jeweils einem Millimeter Vorschub der Druckbahn 1 eine Zeile aufgenommen wird, so kann die Beleuchtungseinrichtung 4 bei jeder Aufnahme einer Zeile aktiviert werden.

Vorzugsweise wird die Zeilenkamera in Verbindung mit einer Objektivblende 7 verwendet, deren Öffnung in Abhängigkeit von der Geschwindigkeit der Druckbahn gesteuert wird. Die veränderliche Blende 7 kann durch die Steuer- und Speichereinheit 5 über eine Signalleitung 7.1 verstellt werden, wobei in dieser Steuer- und Speichereinheit z. B. eine Tabelle mit Blendenwerten und zugeordneten Belichtungszeiten abgelegt sein kann, die in Abhängigkeit von der durch den Drehzahlsensor 1.2 festgestellten Geschwindigkeit ausgewählt werden. Es ist aber auch möglich, die Blende 7 durch einen Regelkreis in Abhängigkeit von der auf der Zeilenkamera einfallenden und gemessenen Lichtmenge zu regeln. Durch die geschwindigkeitsabhängig gesteuerte Blende ist es möglich, unabhängig von der Bahngeschwindigkeit für jede Aufnahme einer Zeile durch die Zeilenkamera 3 die gleiche Lichtmenge bereitzustellen, die sich aus Intensität der Beleuchtungseinrichtung und Belichtungszeit ergibt. Wenn sich die Maschinengeschwindigkeit verlangsamt, so kann die Blende verkleinert werden, während bei schneller laufender Druckbahn die Blende weiter geöffnet werden kann, während von der Zeilenkamera 3 eine Zeile von Bildpunkten aufgenommen wird. Hierbei wird eine feste Belichtungszeit vorgesehen.

Fig. 1 zeigt schematisch eine Blende 7, die von der Steuer- und Speichereinheit 5 zur Veränderung der Blendenöffnung angesteuert wird.

Um den Sichtbereich der Zeilenkamera 3 verändern zu können, wird vorzugsweise ein Zoomobjektiv verwendet.

Die beschriebene Ausgestaltung mit einer verfahrbaren Zeilenkamera 3 insbesondere in Verbindung mit einer verfahrbaren Beleuchtungseinrichtung 4 in der Beobachtungseinheit erlaubt einen sehr kompakten Aufbau der Bildbeobachtungsvorrichtung, die sehr nahe über einer Druckbahn 1 positioniert werden kann. Durch eine solche kompakte Anordnung können Vibrationen an der Beobachtungseinheit unterdrückt werden, die die Abbildung des Druckbildes beeinträchtigen könnten.

## Patentansprüche

1. Verfahren zum Beobachten eines Druckbildes auf einer laufenden Druckbahn (1) mittels einer Zeilenkamera (3) und einer Beleuchtungseinrichtung (4),
wobei die Zeilenkamera (3) quer zur Druckbahn (1) verfahren und jeweils ein Teilbereich des zu beobachtenden Druckbildes aufgenommen wird, worauf das Druckbild aus den aufgenommenen Teilbereichen in einer Steuer- und Speichereinheit (5) zusammengesetzt und auf einem Monitor (6) wiedergegeben wird.

2. Verfahren nach Anspruch 1, wobei die Zeilenkamera (3) einen Teilbereich der Breite des Druckbildes während einer Umdrehung des Druckzylinders aufnimmt, worauf die Zeilenkamera zum nächsten Teilbereich verfahren wird und auf diesem das Druckbild wiederum während einer Umdrehung aufgenommen wird.

3. Verfahren nach Anspruch 1, wobei die Zeilenkamera (3) kontinuierlich quer zur Druckbahn (1) verfahren und ein schräg zur Laufrichtung der Druckbahn verlaufender Teilbereich des Druckbildes aufgenommen wird.

4. Verfahren nach einem der vorhergehenden Ansprüche, wobei mittels einer Blende (7) am Objektiv der Zeilenkamera (3) die an der Zeilenkamera einfallende Lichtmenge gesteuert wird, die von einer Beleuchtungseinrichtung (4) auf den Sichtbereich (3.1) der Zeilenkamera aufgebracht wird.

5. Verfahren nach Anspruch 4, wobei die Blendenöffnung in Abhängigkeit von der Laufgeschwindigkeit der Druckbahn (1) verändert wird.

6. Vorrichtung zum Beobachten eines Druckbildes auf einer laufenden Druckbahn (1), umfassend
eine Zeilenkamera (3) und
eine Beleuchtungseinrichtung (4), die den Abbildungsbereich der Zeilenkamera (3) ausleuchtet, wobei
die Zeilenkamera (3) längs einer Traverse (2) quer zur laufenden Druckbahn (1) verfahrbar ist, wobei der Sichtbereich (3.1) der Zeilenkamera (3) kleiner ist als die Breite der zu beobachtenden Druckbahn bzw. des zu beobachtenden Druckbildes auf der Druckbahn (1).

7. Vorrichtung nach Anspruch 6, wobei die Beleuchtungseinrichtung (4) zusammen mit der Zeilenkamera (3) auf der Traverse (2) verfahrbar angeordnet ist.

8. Vorrichtung nach Anspruch 6 oder 7, wobei eine Blende (7) am Objektiv der Zeilenkamera (3) vorgesehen ist, deren Öffnung die in Abhängigkeit von der Laufgeschwindigkeit der Druckbahn (1) steuerbar ist.

9. Vorrichtung nach Anspruch 8, wobei als Objektiv vor der Kamera ein Zoomobjektiv vorgesehen ist, um den Sichtbereich der Zeilenkamera (3) zu verändern.

10. Vorrichtung nach einem der Ansprüche 6 bis 9, wobei eine Beleuchtungseinrichtung auf der der Zeilenkamera (3) gegenüberliegenden Seite der Druckbahn (1) angeordnet und auf einer Traverse synchron mit der Bewegung der Zeilenkamera (3) verfahrbar ist.

## Claims

1. Method for monitoring a printed image on a moving material web (1) by means of a line scan camera (3) and a lighting means (4),
wherein the line scan camera (3) is moved transverse to the material web (1) and partial areas of the printed image to be monitored are recorded during moving, whereupon the printed image is composed from the recorded partial areas in a control and storage unit (5), and is reproduced on a monitor (6).

2. Method according to claim 1, wherein the line scan camera (3) records a partial area of the width of the printed image during a rotation of the printing cylinder, whereupon the line scan camera is moved to the next partial area of the printed image, which partial area is again recorded during a rotation

3. Method according to claim 1, wherein the line scan camera (3) is moved continuously transverse to the material web (1) and a partial area of the printed image extending transverse to the moving direction of the material web is recorded.

4. Method according to one of the preceding claims, wherein by means of an aperture (7) at the lens of the line scan camera (3), the amount of incident light at the line scan camera is controlled, which amount of light is generated by a lighting means (4) onto the viewing area (3 1) of the line scan camera.

5. Method according to claim 4, wherein the aperture opening is changed in dependence on the moving speed of the material web (1).

6. Device for monitoring a printed image on a moving material web (1), comprising a line scan camera (3) and
a lighting means (4), which lights the reproduction area of the line scan camera (3), wherein
the line scan camera (3) is movable along a cross beam (2) transverse to the moving material web (1), wherein the viewing area (3.1) of the line scan camera (3) is smaller than the width of the material web to be monitored and of the printed image on the material web (1) to be monitored

7. Device according to claim 6, wherein the lighting means (4) is arranged movably together with the line scan camera (3) on the cross beam (2).

8. Device according to claim 6 or 7, wherein an aperture (7) is provided at the lens of the line scan camera (3), the opening of which is controllable in dependence on the moving speed of the material web (1)

9. Device according to claim 8, wherein a zoom lens is provided as a lens in front of the camera, to change the viewing area of the line scan camera (3)

10. Device according to one of claims 6 to 9, wherein a lighting means is arranged on the side of the material web (1) opposite the line scan camera (3), and is movable on a cross beam synchronously with the movement of the line scan camera (3).

## Revendications

1. Procédé servant à observer une image d'impression sur une bande d'impression défilante (1) au moyen d'une caméra linéaire (3) et d'un système d'éclairage (4), dans lequel la caméra linéaire (3) est déplacée de manière transversale par rapport à la bande d'impression (1) et une zone partielle de l'image d'impression à observer est à chaque fois enregistrée, l'image d'impression étant alors recomposée à partir des zones partielles enregistrées dans une unité de commande et de stockage (5) et reproduite sur un moniteur (6).

2. Procédé selon la revendication 1, dans lequel la caméra linéaire (3) enregistre une zone partielle de la largeur de l'image d'impression pendant une rotation du cylindre d'impression, ce après quoi la caméra linéaire est déplacée en direction de la prochaine zone partielle et l'image d'impression est enregistrée à nouveau sur ladite zone partielle pendant une rotation.

3. Procédé selon la revendication 1, dans lequel la caméra linéaire (3) est déplacée en continu de manière transversale par rapport à la bande d'impression (1) et une zone partielle de l'image d'impression s'étendant de manière inclinée par rapport au sens de déplacement de la bande d'impression est enregistrée

4. Procédé selon l'une quelconque des revendications précédentes, dans lequel la quantité de lumière incidente au niveau de la caméra linéaire est commandée au moyen d'un diaphragme (7) au niveau de l'objectif de la caméra linéaire (3), laquelle quantité est fournie par un système d'éclairage (4) dans le champ de vision (3.1) de la caméra linéaire.

5. Procédé selon la revendication 4, dans lequel l'ouverture du diaphragme varie en fonction de la vitesse de déplacement de la bande d'impression (1)

6. Dispositif servant à observer une image d'impression sur une bande d'impression défilante (1), comprenant
une caméra linéaire (3) et
un système d'éclairage (4) qui éclaire la zone d'imagerie de la caméra linéaire (3), dans lequel
la caméra linéaire (3) peut être déplacée le long d'une traverse (2) de manière transversale par rapport à la bande d'impression défilante (1), le champ de vision (3.1) de la caméra linéaire (3) étant plus petit que la largeur de la bande d'impression à observer ou de l'image d'impression à observer sur la bande d'impression (1).

7. Dispositif selon la revendication 6, dans lequel le système d'éclairage (4) est disposé de manière à pouvoir être déplacé conjointement avec la caméra linéaire (3) sur la traverse (2).

8. Dispositif selon la revendication 6 ou 7, dans lequel un diaphragme (7) est prévu sur l'objectif de la caméra linéaire (3), dont l'ouverture peut être commandée en fonction de la vitesse de déplacement de la bande d'impression (1).

9. Dispositif selon la revendication 8, dans lequel on prévoit un objectif à zoom comme objectif à l'avant de la caméra afin de modifier le champ de vision de la caméra linéaire (3)

10. Dispositif selon l'une quelconque des revendications 6 à 9, dans lequel un système d'éclairage est disposé sur le côté de la bande d'impression (1) faisant face à la caméra linéaire (3) et peut être déplacé sur une traverse de manière synchrone avec le déplacement de la caméra linéaire (3)
